# EUROPEAN PATENT APPLICATION

(11) **EP 4 591 987 A1**
(43) Date of publication of application: **30.07.2025**
(21) Application number: 23720925.9
(22) Date of filing: 29.03.2023
(51) Int. Cl.: B02C 13/286, B02C 25/00, B65F 1/00, B65F 1/14, B02C 19/00

(54) **SYSTEM FOR TREATING GLASS CONTAINERS**

(30) Priority: 20.09.2022 ES 202230809
(71) Applicant: Recy-Home, S.L., 28001 Madrid (ES)
(72) Inventor: PEDROCHE PALOMAR, Antonio, 28001 MADRID (ES)
(74) Representative: Isern Patentes y Marcas S.L.
(86) International application number: PCT/ES2023/070200
(87) International publication number: WO 2024/062142

(57) **Abstract**

The invention relates to a system for treating glass containers comprising at least one crushing means and one receiving bin in correspondence and linked to each crushing means, the crushing means being able to receive glass containers and crush, break and shatter them into pieces, each crushing means and the receiving bin thereof being mutually arranged such that the pieces resulting from each crushing means end up arranged and stored in each receiving bin corresponding to each crushing means, the crushing means and the receiving bin thereof further being enabled and mutually arranged such that the receiving bin is reversibly separable from its connection to the crushing means.

## Description

### OBJECT OF THE INVENTION

The object of the present invention application is to register a system for treating glass containers that incorporates notable innovations and advantages compared to techniques used hitherto.

More specifically, the invention proposes the development of a system for treating glass containers which, due to the particular arrangement thereof, allows glass containers to be collected and processed for crushing, as well as the subsequent confinement and removal thereof.

### BACKGROUND OF THE INVENTION

The problem of the generation of urban solid waste, and the way it affects all citizens, is known in the current state of the art.

With regard to this issue, one of the main problems arising in cities is the cycle that begins in urban centres when a user acquires a product from the supermarket, a distribution centre, etc., and then, after the cycle is completed, it starts again with the recovery or reuse of new raw materials for manufacturing the same.

Additionally, with regard to the hospitality sector, there is an added problem related to glass waste which is difficult to process at the establishments themselves, with respect to the reduction of the volume thereof once empty, as well as the additional problem of having to transport it to the collection points (glass containers) and putting the containers one by one into the same.

This entails moving large amounts of weight, either by the owners of the establishments or their employees, and a lot of time spent on said operations.

Furthermore, these tasks are often carried out at the end of the workday, in other words, at times when it is highly likely that residents in the area are at home resting, and these unitary dumping activities, in which single units are disposed of, are very noisy, repeated in each unitary dumping operation of each container, which can take a very long time and be quite bothersome to the neighbours.

Moreover, these types of operations are often unpleasant for the employees of the establishments, given that at the end of their work day they must carry out these fatiguing operations of taking out the waste, with the discomfort caused by doing so, which is unergonomic for the worker due to the physical effort involved and annoying to the people living in the area.

The present invention contributes to solving this problem, since it allows for the collection and processing of glass containers for the crushing thereof, as well as the subsequent confinement and removal of the same.

### DESCRIPTION OF THE INVENTION

The present invention has been developed with the aim of providing a system for treating glass containers, comprising at least one crushing means and one receiving bin in correspondence and linked to each crushing means, the crushing means being able to receive glass containers and crush, break and shatter them into pieces, each crushing means and the receiving bin thereof being mutually arranged such that the pieces resulting from each crushing means end up arranged and stored in each receiving bin corresponding to each crushing means, the crushing means and the receiving bin thereof further being enabled and mutually arranged such that the receiving bin is reversibly separable from its connection to the crushing means.

Additionally, the system for treating glass containers comprises a casing wherein the crushing means and the receiving bins thereof are integrated and installed, said casing having an opening mouth enabled to allow the glass containers to be communicated with and introduced into the crushing means, the receiving bins further being installed in said casing in such a way that they are reversibly separable from the same casing.

Preferably, the system for treating glass containers comprises transport means enabled to separate the receiving bin from the connection thereof to the crushing means.

Alternatively, in the system for treating glass containers, the transport means are incorporated in the receiving bin itself.

Alternatively, in the system for treating glass containers, the transport means are external to the receiving bin itself.

Preferably, in the system for treating glass containers, the transport means comprise a trolley enabled for the fastening of at least one receiving bin and the transfer thereof.

Preferably, in the system for treating glass containers, the crushing means comprise a steel hammer mill device.

Alternatively, in the system for treating glass containers, the crushing means comprise a vertical breaking device with an eccentric.

Additionally, the system for treating glass containers incorporates a control system linked to the crushing means, enabled to turn said crushing means on and off.

Alternatively, in the system for treating glass containers, the control system comprises a manually actuated button.

Alternatively, in the system for treating glass containers, the control system is also linked to a lid arranged on the opening mouth of the casing.

Alternatively, in the system for treating glass containers, the control system is enabled to count the number of containers received by the crushing means.

Alternatively, in the system for treating glass containers, the control system further comprises warning means enabled to notify a user when the receiving bin is full.

Alternatively, in the system for treating glass containers, the control system is connected to and shares data with an application, which can be installed in the control system itself or installed externally, which is, in turn, enabled to manage operation variables of the system for treating glass containers.

Preferably, in the system for treating glass containers, the receiving bin is made of plastic or steel.

The present invention achieves a collection and processing of glass containers to be crushed, as well as the subsequent confinement and removal thereof.

Other features and advantages of the system for treating glass containers will become apparent from the description of a preferred, but not exclusive, embodiment, which is illustrated by way of non-limiting examples in the accompanying drawings, wherein:

### BRIEF DESCRIPTION OF DRAWINGS

Figure 1 is a cross-sectional and perspective view of a preferred embodiment of the system for treating glass containers of the present invention.
Figure 2 is an elevation view of a preferred embodiment of the system for treating glass containers of the present invention.
Figure 3 is a schematic and perspective view of a preferred embodiment of the system for treating glass containers of the present invention.
Figure 4 is a schematic view indicating the transport capacity of the receiving bins by means of a trolley comprised in the transport means.

### DESCRIPTION OF A PREFERRED EMBODIMENT

The system for treating glass containers of the present invention comprises crushing means and receiving bins in correspondence with and linked to each of the crushing means.

The aforementioned crushing means are enabled to receive glass containers and to crush, break and shatter them into pieces.

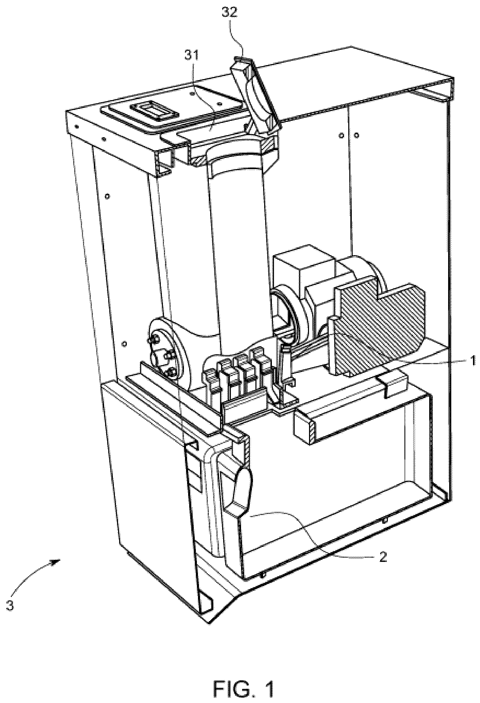

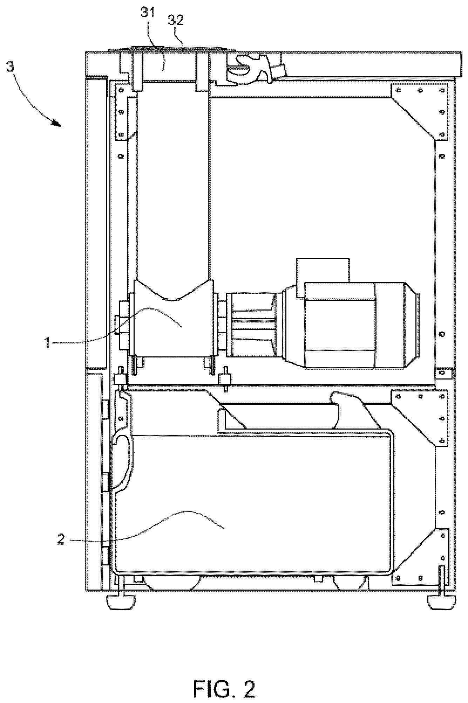

As can be seen schematically in the cross-sectional view of figure 1 and in the elevation view of figure 2, in this preferred embodiment, the crushing means comprise a steel hammer mill device 1, linked to a receiving bin 2. In other preferred embodiments, the crushing means may comprise a vertical breaking device with an eccentric.

The aforementioned steel hammer mill 1 reduces the volume of the glass, crushing it by actuating hammers, which break it into pieces of a characteristic size of 2.00*2.00 cm. In this way, the volume occupied by the glass is considerably reduced.

In this preferred embodiment, the steel hammer mill 1 is a machine/appliance with dimensions similar to those of a small device that can be embedded in any kitchen counter, bar counter or integrated into any office.

Also in this preferred embodiment shown in figures 1, 2 and 3, the system for treating glass containers of the invention comprises a casing 3, wherein two steel hammer mills 1 and the respective receiving bins 2 thereof are integrated.

In this preferred embodiment, the system for treating glass containers comprises two steel hammer mills 1, and the dimensions of the casing 3 are approximately 450mm wide by 500mm deep by 850mm high.

If, for example, it comprises only one steel hammer mill 1, the dimensions of the casing 3 could be approximately 240mm wide by 500mm deep and 850mm high.

These dimensions are not necessarily fixed, and they can vary considerably if necessary, depending on the user's needs in different preferred embodiments of the same invention.

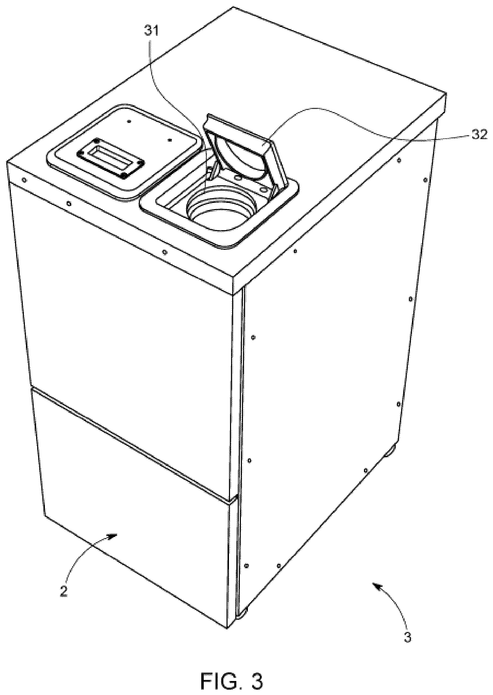

Said casing 3 has an opening mouth 31 for each hammer mill 1, which is enabled to allow the glass containers to be communicated with and introduced into the steel hammer mills 1, and which can be arranged on the upper panel of the same casing 3, as can also be seen best in figure 3, or on the upper part of the front panel.

The glass containers introduced into the loading mouth 31 pass to the steel hammer mill 1, which performs the crushing thereof, reducing the volume of the same.

Moreover, in different preferred embodiments, the system for treating glass containers can incorporate a control system, not represented in the drawings, linked to the hammer mill 1 and enabled to turn the crushing means on and off.

In different preferred embodiments, said control system can comprise a manually actuated button, able to be directly actuated by the user to turn the hammer mill 1 on or off, or, for example, the same control system can also be linked to a lid 32 arranged on the opening mouth 31 of the casing 3, such that when the lid 32 is closed, the same hammer mill 1 is automatically activated.

The control system can also be enabled to count the containers received and crushed by the hammer mill 1, and it can also comprise warning means enabled to notify a user when the receiving bin 2 is full.

Said control system can be connected to and share data with an application, which can be installed in the control system itself or installed externally, which is enabled to manage operation variables of the system for treating glass containers of the invention and thus display and manage, for example, the number of containers treated in a day, a week or in a specific time period, indicating how full the receiving bin 2 is.

The receiving bin 2 is preferably made of plastic or steel, since crushed glass is an element that can cut if handled incorrectly.

The aforementioned receiving bin 2 is light, contains the glass waste without allowing it to fall out, can be easily handled for transport and dumping, can be safely stacked without the risk of falling, and can be easily transported.

Said receiving bin 2 has dimensions that comply with work safety regulations, the weight thereof when full being no greater than the amount of kilograms established by the main regulations (18/20kg), and it is easy to handle and is operationally safe with respect to the crushed elements, preventing direct contact with the same.

Each steel hammer mill 1 and the receiving bin 2 thereof are mutually arranged, such that the pieces resulting from each steel hammer mill 1 are arranged and stored in the receiving bin 2 corresponding to each steel hammer mill 1, falling into them by the force of gravity.

In addition, the receiving bins 2 are installed in said casing 3 in such a way that they are reversibly separable from the same casing 3, and thus are also separable from the hammer mills 1.

Furthermore, the system for treating glass containers of the invention comprises transport means enabled to separate the receiving bin 2 from the connection thereof to the hammer mills 1 and from the casing 3.

Said transport means can be incorporated in the receiving bin 2 itself or be external to the receiving bin 2 itself.

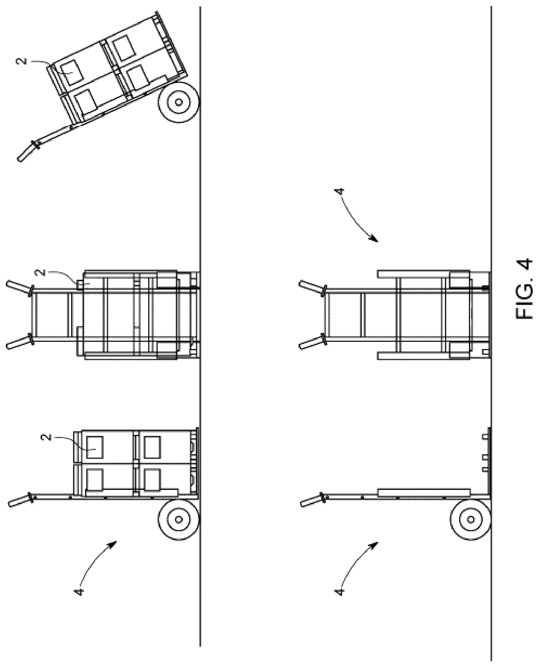

In this preferred embodiment, said transport means comprise a trolley 4, as shown in figure 4, enabled for a proper fastening of the crushed glass receiving bins 2, thereby preventing said containers from moving in the transfer thereof to the glass collection centres, which, for example, local governments or other public establishments provide on the streets of their cities.

In different preferred embodiments, this trolley 4 is designed to perfectly transport six receiving bins 2 which can hold a total of approximately 120kg, which is a total of approximately 150 wine bottles of ¾ a litre, or 4 containers of 110 litres.

In other preferred embodiments, the system for treating glass bottles of the invention can even be adapted to process glass by colours, and, for example, be designed to process glass into the colour categories of colourless, amber and green in three specific hammer mills 1 with three independent opening mouths 31 in the casing 3 for each colour, or have an opening mouth 31, hammer mill 1 and receiving bin 2 for each specific colour.

The system for treating glass containers of the present invention can also incorporate a system for measuring weight, enabled to measure the weight of the receiving bin 2. To do so, said weight control system in turn comprises weighing means to weigh the receiving bin 2 and weight signalling means linked to the weighing means.

The aforementioned weight measuring system can also be connected to and share data with the previously mentioned control system. The weighing means can progressively determine the weight accumulated in the receiving bin 2 as it is progressively being filled, which is communicated to the control system, until reaching a weight limit value of the receiving bin 2 previously established in the control system, wherein the acoustic and/or visual weight signalling means are activated, notifying the user that the receiving bin 2 is full and halting the operation of the system for treating glass containers of the invention, allowing the receiving bin 2 to be emptied or repositioned.

The system for treating glass containers of the same invention can also incorporate a system for controlling the filling of the receiving bin 2 which, in turn, comprises a filling level gauge of said receiving bin 2, thereby controlling the accumulated volume in the aforementioned receiving bin 2. Said filling control system can also be connected to and share data with the control system to thereby halt the operation of the system for treating glass containers of the invention once the receiving bin 2 is full.

The system for treating glass containers of the invention can also incorporate a colour recognition system, enabled to identify the colour of the glass containers received.

Said colour recognition system can, in turn, comprise an optical sensor arranged in the opening mouth 31 of the casing 3 and enabled to identify the colour of the incoming glass containers by using light, for example by shining light through the glass containers and subsequently analysing the light after it has gone through the glass container to thereby determining the colour thereof. The colour recognition system can also be connected to and share data with the control system.

Accordingly, by means of the control system, it is possible for the system for treating glass containers of the invention to only function selectively when glass containers of a specific colour are inserted.

This can be especially useful for example in the previously mentioned case of having an opening mouth 31, a hammer mill 1 and a receiving bin 2 for each specific colour.

In such case, the colour recognition system identifies the colour of the incoming glass container, and the control system determines if the colour of that glass container matches the colour assigned in that precise opening mouth 31 for that precise receiving bin 2. If the colour does not match, the control system does not activate the hammer mill 1 of the crushing means of the system for treating glass containers of the invention. Thus there can be no human error of inserting a glass container of the wrong colour into the system.

The advantages of the system for treating glass containers of the invention are clear for users/employees in the hospitality sector when they have to handle all of the non-returnable glass they use, given that the volume of the same is lower.

The invention is also highly advantageous for the moment when the glass waste is to be dumped in the existing containers, due to the enhanced speed of the emptying, and it is also beneficial for the residents in the vicinity of these containers who relentlessly have to put up with the bothersome noise of the dumping of one bottle after another, many times in the middle of the night.

The general advantages obtained with the system for treating glass containers of the invention are clear, both for those who process the glass at establishments and for those who transport the glass to the recycling factories. Air would not be transported, and thus the collection vehicles could be smaller, thereby improving city traffic, and furthermore, the residents living near the glass containers would be spared the unpleasant noise which affects them day after day.

The details, shapes, dimensions and other accessory elements, as well as the materials used to manufacture the system for treating glass containers of the invention, may be suitably substituted for others which are technically equivalent and do not diverge from the essential nature of the invention, nor the scope defined by the claims included below.

## Claims

1. A system for treating glass containers, **characterised in that** it comprises at least one crushing means and one receiving bin (2) in correspondence and linked to each crushing means, the crushing means being able to receive glass containers and crush, break and shatter them into pieces, each crushing means and the receiving bin (2) thereof being mutually arranged such that the pieces resulting from each crushing means end up arranged and stored in each receiving bin (2) corresponding to each crushing means, the crushing means and the receiving bin (2) thereof further being enabled and mutually arranged such that the receiving bin (2) is reversibly separable from its connection to the crushing means.

2. The system for treating glass containers according to claim 1, comprising a casing (3) wherein the crushing means and the receiving bins (2) thereof are integrated and installed, said casing having an opening mouth (31) enabled to allow the glass containers to be communicated with and introduced into the crushing means, the receiving bins (2) further being installed in said casing (3) in such a way that they are reversibly separable from the same casing (3).

3. The system for treating glass containers according to any of the preceding claims, comprising transport means enabled to separate the receiving bin (2) from the connection thereof to the crushing means.

4. The system for treating glass containers according to claim 3, wherein the transport means are incorporated in the receiving bin (2) itself.

5. The system for treating glass containers according to claim 3, wherein the transport means are external to the receiving bin (2) itself.

6. The system for treating glass containers according to claim 5, wherein the transport means comprise a trolley (4) enabled for fastening of at least one receiving bin (2) and the transfer thereof.

7. The system for treating glass containers according to any of the preceding claims, wherein the crushing means comprise a steel hammer mill device (1).

8. The system for treating glass containers according to any of claims 1 to 6, wherein the crushing means comprise a vertical breaking device with an eccentric.

9. The system for treating glass containers according to any of the preceding claims, which incorporates a control system linked to the crushing means, enabled to turn said crushing means on and off.

10. The system for treating glass containers according to claim 9, wherein the control system comprises a manually actuated button.

11. The system for treating glass containers according to claim 9 when dependent on claim 2, wherein the control system is also linked to a lid (32) arranged on the opening mouth (31) of the casing (3).

12. The system for treating glass containers according to any of claims 9 to 11, wherein the control system is enabled to count the containers received by the crushing means.

13. The system for treating glass containers according to any of claims 9 to 12, wherein the control system further comprises warning means enabled to notify a user when the receiving bin (2) is full.

14. The system for treating glass containers according to any of claims 9 to 13, wherein the control system is connected to and shares data with an application, which can be installed in the control system itself or installed externally, which is, in turn, enabled to manage operation variables of the system for treating glass containers.

15. The system for treating glass containers according to any of the preceding claims, wherein the receiving bin (2) is made of plastic or steel.

16. The system for treating glass containers according to any of the preceding claims, which incorporates a system for measuring weight, enabled to measure the weight of the receiving bin (2), wherein said control system in turn comprises weighing means to weigh the receiving bin (2) and weight signalling means linked to the weighing means.

17. The system for treating glass containers according to claim 16 when dependent on one of claims 9 to 14, wherein the weight measuring system is connected to and shares data with the control system.

18. The system for treating glass containers according to any of the preceding claims, which incorporates a system for controlling the filling of the receiving bin (2) which, in turn, comprises a filling level gauge of said receiving bin (2).

19. The system for treating glass containers according to claim 18 when dependent on one of claims 9 to 14 or on claim 17, wherein the filling control system is connected to and shares data with the control system.

20. The system for treating glass containers according to any of the preceding claims, which incorporates a colour recognition system, enabled to identify the colour of the glass containers received.

21. The system for treating glass containers according to claim 18 when dependent on one of claims 9 to 14 or on claim 17 or 19, wherein the colour recognition system comprises an optical sensor enabled to identify the colour of the glass containers by using light, said colour recognition system further being connected to and sharing data with the control system.
